# EUROPEAN PATENT APPLICATION

(11) **EP 3 711 971 A1**
(43) Date of publication of application: **23.09.2020**
(21) Application number: 18878849.1
(22) Date of filing: 21.02.2018
(51) Int. Cl.: B60B 33/00, A47L 9/00, A47L 9/28, G05D 1/02

(54) **WHEEL SUPPORT STRUCTURE FOR SELF-PROPELLED ELECTRONIC DEVICE**

(30) Priority: 16.11.2017 JP 2017221092
(71) Applicant: Sharp Kabushiki Kaisha, Sakai City, Osaka 590-8522 (JP)
(72) Inventor: YATO, Yuki, Sakai City, Osaka 590-8522 (JP)
(74) Representative: Treeby, Philip David William
(86) International application number: PCT/JP2018/006220
(87) International publication number: WO 2019/097735

(57) **Abstract**

An object of the present invention is to provide a self-propelled electronic device that can be downsized and can improve in performance in climbing onto a floor level difference.

A wheel support structure for the self-propelled electronic device, the wheel support structure characterized by comprising: a drive wheel configured to allow a housing to travel; a support portion fixed in the housing and configured to support the drive wheel position-changeably in a linear direction inclined from a vertical line; and a biasing member configured to bias the drive wheel toward a bottom side of the housing in the linear direction.

## Description

### [Technical Field]

The present invention relates to a wheel support structure for a self-propelled electronic device.

### [Background Art]

As a traditional self-propelled electronic device, for example, PTL 1 discloses a self-propelled transport vehicle comprising the following members: front and rear body framings; a plurality of casters supporting the body framings; right and left frames provided between the front body framing and the rear body framing; and a pair of drive wheels supporting the right and left frames.

Each of the frames of this self-propelled transport vehicle is swingably joined with one of the front and rear body framings through an oscillation shaft extending in a right-left direction and also is joined with the other body framing through a junction shaft so as to be swingable up and down.

Each of the body framings and each of the frames have a compression spring provided therebetween that allows each of the junction shafts to penetrate through the compression spring so that the drive wheels are pushed downward by the compression springs through the frames.

In case a floor surface is uneven where this self-propelled transport vehicle travels on, the drive wheels are configured to go up and down with use of the oscillation shafts as fulcrum shafts in response to the unevenness of the floor surface and to rotate along the uneven floor surface.

### [Citation List]

### [Patent Literature]

[PTL 1] Japanese Unexamined Patent Application Publication No. Hei 9(1997)-286337

### [Summary of Invention]

### [Technical Problem]

The self-propelled transport vehicle of PTL 1 has wheel support structures configured to support the drive wheels; and the wheel support structures require wide spaces in a front-rear direction and thus are unsuitable for downsizing the self-propelled transport vehicle.

The drive wheels are configured to be supported by the frames in such a way as to be oscillated vertically with use of the shafts as the centers, with the result that the self-propelled transport vehicle cannot sometimes climb onto a floor level difference.

Namely, when this self-propelled transport vehicle climbs on the floor level difference, the caster of the body framing on the front side climbs on the floor level difference, and then the drive wheels come close to the floor level difference to climb on the floor level difference. Once the caster at the front has climbed onto the floor level difference, the frames become inclined; and the inclined frames and the floor surface create a wider interspace therebetween. The drive wheels then poke out toward the floor nearly vertically; and the vertically projected drive wheels are likely to get stuck with the floor level difference, with the result that the self-propelled transport vehicle cannot sometimes climb onto the floor level difference.

In view of such a problem above, the present invention has an object of providing a wheel support structure for a self-propelled electronic device, the wheel support structure making reduction in size of the self-propelled electronic device possible and enabling the self-propelled electronic device to improve its performance in climbing onto a floor level difference (i.e., an elevation step, an elevation change, or a floor step).

### [Solution to Problem]

The present invention provides a wheel support structure for a self-propelled electronic device, the wheel support structure comprising: a drive wheel configured to allow a housing to travel; a support portion fixed in the housing and configured to support the drive wheel position-changeably in a linear direction tilted with respect to a plumb line; and a biasing member configured to bias the drive wheel toward a bottom side of the housing in the linear direction.

### [Advantageous Effects of Invention]

The traditional wheel support structure, in which the drive wheel is supported swingably in a vertical direction by the oscillation shaft as the center extending in the right-left direction, requires a certain space extending from the oscillation shaft to a center of the drive wheel in the front-rear direction; and thus the housing needs to have a wide space in the front-rear direction to house the wheel support structure therein, with the result that the self-propelled transport vehicle becomes long in the front-rear direction. The present invention, however, does not oscillate the drive wheels, which is contrary to the traditional way; and the present invention, instead, is capable of pushing the drive wheels toward the bottom side of the housing and changing their positions in the linear direction inclined from the vertical line, with the result that the present invention is capable of making spaces for housing the wheel support structures small in the front-rear direction, and thus is capable of shortening a length of the self-propelled electronic device in the front-rear direction and of downsizing the self-propelled electronic device.

Since the drive wheels are position-changeable in the linear direction inclined from the vertical line, it makes it possible to improve the performance of the self-propelled electronic device in climbing onto the floor level difference.

### [Brief Description of Drawings]

[FIG. 1]

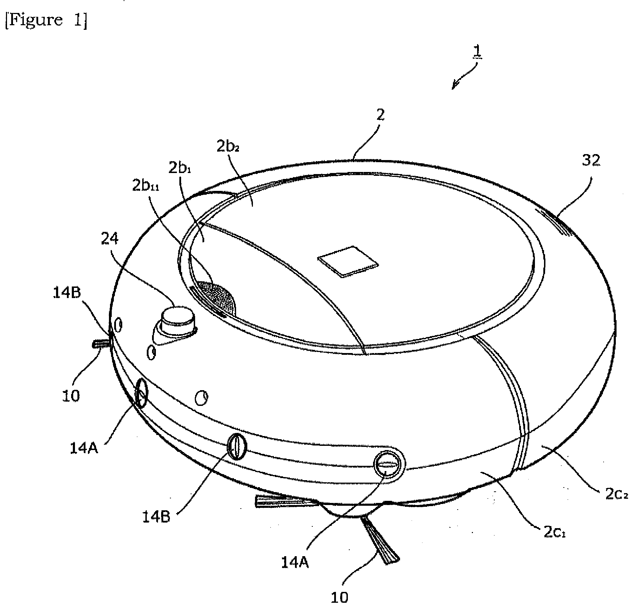

   FIG. 1 is an appearance perspective view of a self-propelled electronic device comprising wheel support structures of the present invention.
[FIG. 2]

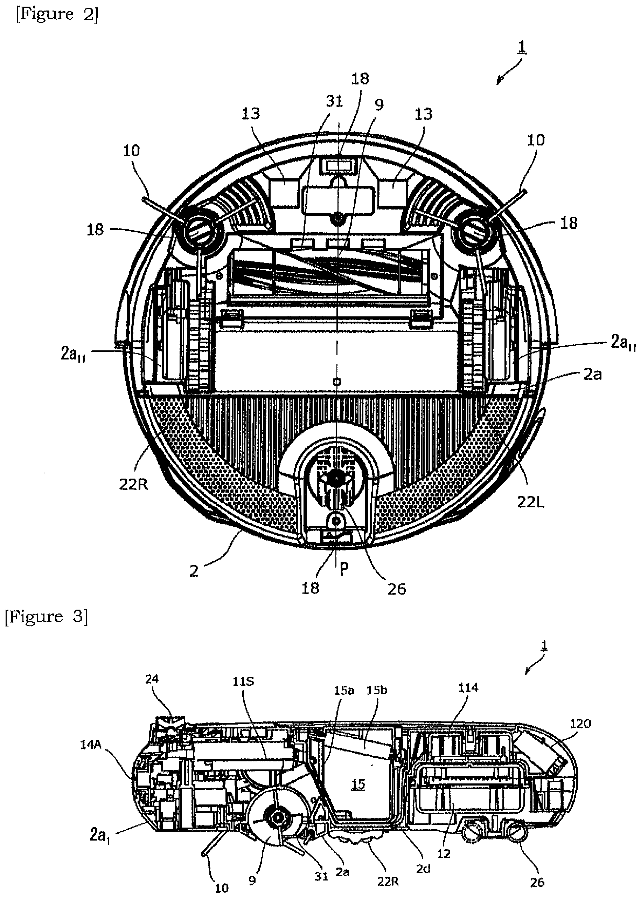

   FIG. 2 is a bottom view of the self-propelled electronic device illustrated in FIG. 1.
[FIG. 3]
   FIG. 3 is a vertical cross-section view of the self-propelled electronic device illustrated in FIG. 1 taken along a front-rear direction.
[FIG. 4]

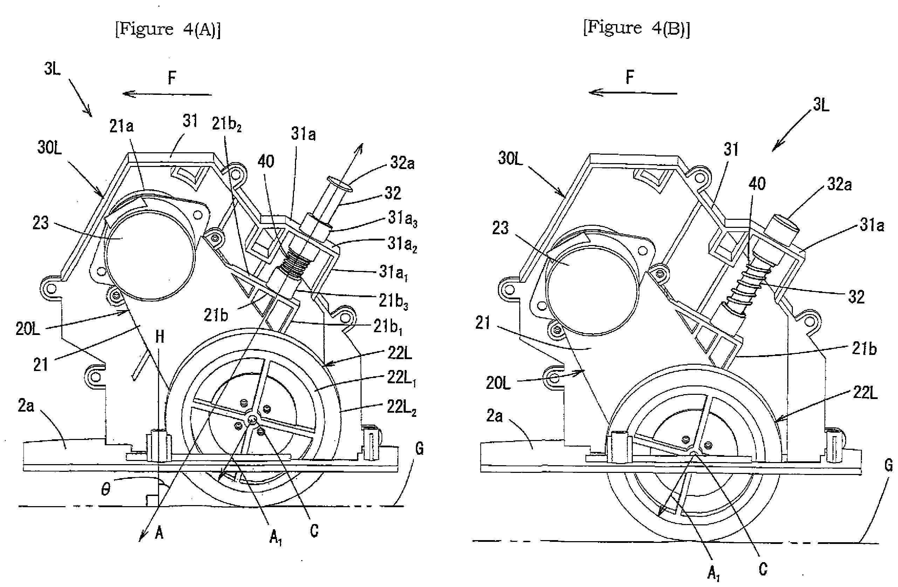

   FIG. 4 is explanatory views of a wheel support structure in accordance with Embodiment 1: FIG. 4(A) is the explanatory view of the wheel support structure that is in a state to travel on a floor; and FIG. 4(B) is the explanatory view of the wheel support structure that is in a state to climb on a floor level difference.
[FIG. 5]

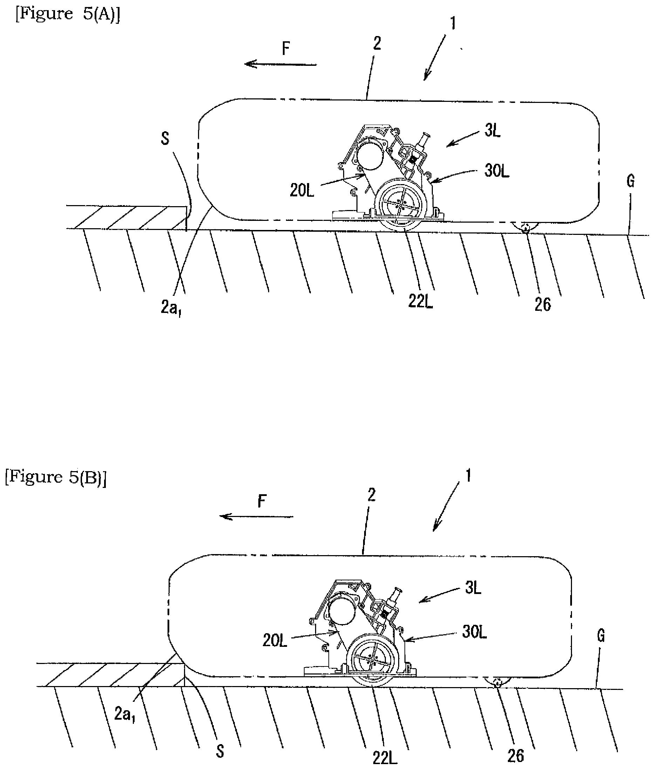

   FIG. 5 is explanatory views of the self-propelled electronic device in accordance with Embodiment 1 that is in a state to travel on a floor: FIG. 5(A) is the explanatory view of the self-propelled electronic device that is getting close to a floor level difference; and FIG. 5(B) is the explanatory view of the self-propelled electronic device that comes in contact with the floor level difference.
[FIG. 6]

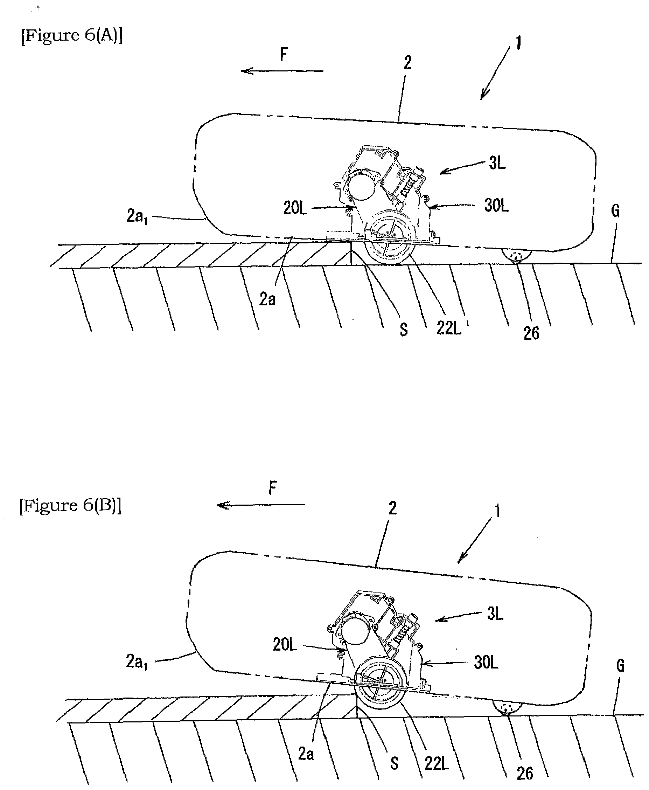

   FIG. 6 is explanatory views of the self-propelled electronic device in accordance with Embodiment 1 that is in a state to travel on a floor: FIG. 6(A) illustrates a first stage in which the self-propelled electronic device climbs on a floor level difference; and FIG. 6(B) illustrates a second stage in which the self-propelled electronic device climbs onto the floor level difference.
[FIG. 7]

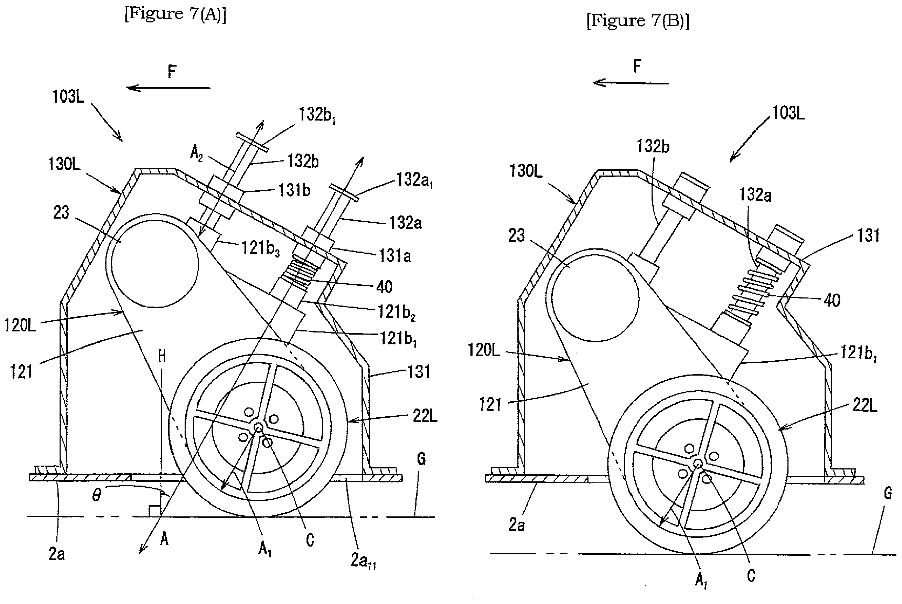

   FIG. 7 is explanatory views of a wheel support structure in accordance with Embodiment 2: FIG. 7(A) is the explanatory view of the wheel support structure that is in a state to travel on a floor; and FIG. 7(B) is the explanatory view of the wheel support structure that is in a state to climb on a floor level difference.
[FIG. 8]

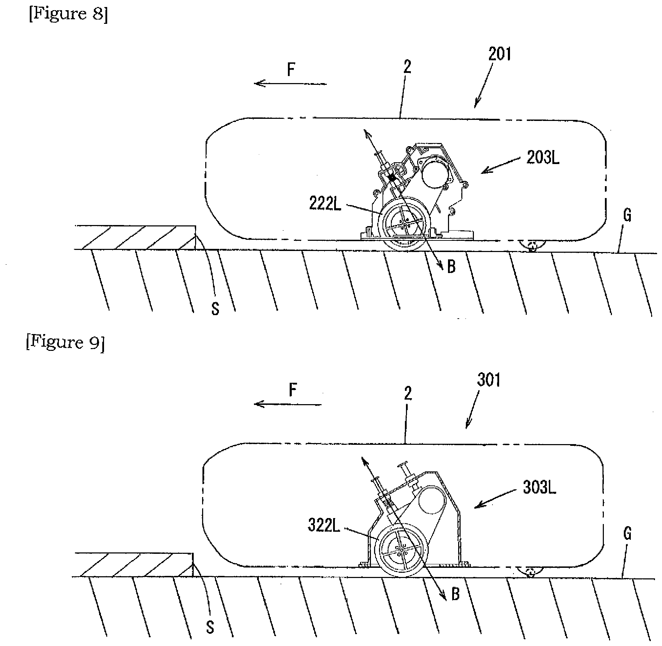

   FIG. 8 is an explanatory view of a self-propelled electronic device in accordance with Embodiment 3 that is in a state to travel on a floor.
[FIG. 9]
   FIG. 9 is an explanatory view of a self-propelled electronic device in accordance with Embodiment 4 that is in a state to travel on a floor.

### [Description of Embodiments]

The following Embodiments will exemplify a self-propelled vacuum cleaner as a self-propelled electronic device of the present invention with use of drawings; however, the self-propelled electronic device of the present invention is not limited to the self-propelled vacuum cleaner.

### Embodiment 1

FIG. 1 is an appearance perspective view of a self-propelled electronic device comprising wheel support structures of the present invention; FIG. 2 is a bottom view of the self-propelled electronic device illustrated in FIG. 1; and FIG. 3 is a vertical cross-section view of the self-propelled electronic device illustrated in FIG. 1 taken along a front-rear direction. FIG. 4 is explanatory views of a wheel support structure in accordance with Embodiment 1: FIG. 4(A) is the explanatory view of the wheel support structure that is in a state to travel on a floor; and FIG. 4(B) is the explanatory view of the wheel support structure that is in a state to climb on a floor level difference.

### Structure of Self-Propelled Vacuum Cleaner

As illustrated in FIG. 1 to FIG. 3, a self-propelled vacuum cleaner 1 comprising the wheel support structures in accordance with Embodiment 1 comprises a flat disc-shaped housing 2. The housing 2 in accordance with Embodiment 1 has the disc-like shape, but should not be limited to such a shape; and the housing may be shaped, for example, like an oval or a polygon, from a planar view.

The housing 2 includes a circular top plate. The top plate comprises a front portion 2b₁, which is a front part of the top plate, and a lid portion 2b₂, which extends from a middle part through a rear part of the top plate; and the lid portion 2b₂ is configured to open upward by using a hinge (not illustrated) as a fulcrum point that is disposed at a side of a boundary between the front portion 2b₁ and the lid portion 2b₂ of the top plate. The front portion 2b₁ of the top plate has at its front end a plurality of air holes 2b₁₁ configured to release heat generated from a circuit plate (not illustrated) disposed inside the housing.

The housing 2 also includes a ring-like side plate and a bottom plate 2a. As illustrated in FIG. 3, the housing 2 also includes an inner frame wall 2d.

The bottom plate 2a is configured in such a way that a front end 2a₁ thereof is raised frontward to be curved or inclined (see FIG. 3 and FIG. 5(A)).

The side plate comprises an arc-shaped front half portion 2c₁ and an arc-shaped rear half portion 2c₂. The front half portion 2c₁ of the side plate is configured to be slidably fitted to the inner frame wall 2d and has an elastic member (not illustrated) placed therebetween so that the front half portion functions as a bumper. The front half portion 2c₁ of the side plate is provided with an obstacle contact sensor (not illustrated) placed inside the housing, the obstacle contact sensor detecting any collision of the front half portion 2c₁ with an obstacle. The front half portion 2c₁ of the side plate also has three (3) ultrasonic receivers 14A that are respectively disposed in front, diagonally forward right, and diagonally forward left, and further has two (2) ultrasonic transmitters 14B that are alternately disposed between the three ultrasonic receivers 14A.

Furthermore, the housing 2 is provided with a guide signal receiver 24, which is visibly placed at a front surface of the housing, and a charging connector 13.

The housing 2 has an intake opening 31 provided on the bottom plate 2a of the bottom portion and an exhaust opening 32 provided diagonally upward on the rear half portion of the housing; and the housing 2 also has a dust collection portion 15 and an electric blower (not illustrated) disposed thereinside. The dust collection portion 15 is to collect dust inside of a room, and comprises a dust cup 15a and a dust filter 15b. The dust cup 15a has the following openings: an inflow opening leading to an inflow passage communicating with the intake opening 31; and an outflow opening leading to a duct portion 114 communicating with the electric blower (not illustrated).

The self-propelled vacuum cleaner 1 is provided with the following members at a front half part of the bottom portion: a rotary brush 9 disposed behind the intake opening 31; side brushes 10 disposed diagonally right and left, respectively, in front of the intake opening 31; and drive wheel units (see FIG. 4), including drive wheels (right drive wheel 22R and left drive wheel 22L), disposed diagonally right and left, respectively, in the back of the intake opening 31. Lower portions of the drive wheels protrude outside of the housing 2 through right and left openings 2a₁₁, respectively, provided on the bottom plate 2a of the housing 2.

The rotary brush 9 and the side brushes 10 are driven and rotated by a brush motor (not illustrated). The self-propelled vacuum cleaner is provided with a freely-rotatable rear wheel 26 placed in the middle of a right-left direction of a rear half part of the bottom portion. The rear wheel 26 can rotate freely. FIG. 2 and FIG. 3 illustrate how the rear wheel 26 rotates 180 degrees forward, with use of a chain double-dashed line.

The self-propelled vacuum cleaner 1 has four (4) floor detecting sensors 18 in total that are placed on the bottom portion of the housing 2 at the following positions, respectively: at a front end and a rear end in the front-rear direction and at shaft centers of the side brushes 10 disposed on the right and left sides of the bottom portion.

The self-propelled vacuum cleaner 1 has the circuit plate 11S disposed at the front half part of the housing, and also has a rechargeable battery 12 and an ion generator 120 disposed at the rear half part of the housing.

The self-propelled vacuum cleaner 1 is configured to vacuum-clean a floor where the vacuum cleaner is placed, while self-traveling on the floor, sucking in air containing dust on the floor (floor surface where the vacuum cleaner travels on), and blowing out the air from which the dust has been removed. The self-propelled vacuum cleaner 1 is configured to autonomously avoid an obstacle detected by the ultrasonic receivers 14A as obstacle detecting sensors while traveling on the floor and also to autonomously avoid a floor level difference that is lower than the floor surface and is detected by the floor detecting sensors 18 while traveling on the floor. The self-propelled vacuum cleaner 1 is configured to have a function of autonomously returning to a charging station (not illustrated) after cleaning the floor.

### Wheel Support Structure

FIG. 4 is the explanatory views of the wheel support structure in accordance with Embodiment 1: FIG. 4(A) is the explanatory view of the wheel support structure that is in a state to travel on the floor; and FIG. 4(B) is the explanatory view of the wheel support structure that is in a state to climb on the floor level difference. FIG. 5 is explanatory views of the self-propelled electronic device in accordance with Embodiment 1 that is in a state to travel on a floor: FIG. 5(A) is the explanatory view of the self-propelled electronic device that is getting close to a floor level difference; and FIG. 5(B) is the explanatory view of the self-propelled electronic device that comes in contact with the floor level difference. FIG. 6 is explanatory views of the self-propelled electronic device in accordance with Embodiment 1 that is in a state to travel on a floor: FIG. 6(A) illustrates a first stage in which the self-propelled electronic device climbs on a floor level difference; and FIG. 6(B) illustrates a second stage in which the self-propelled electronic device climbs onto the floor level difference. FIG. 4 to FIG. 6 illustrate the left side of the drive wheel unit.

As illustrated in FIG. 2 to FIG. 5, the self-propelled vacuum cleaner 1 in accordance with Embodiment 1 comprises the right and left wheel support structures including the following members: right and left support portions 30L (the right support portion not illustrated) configured to respectively support drive wheel units 20L (the right drive wheel unit not illustrated) position-changeably in a linear direction (indicated by an arrow A), the drive wheel units being fixed to the bottom plate 2a inside the housing 2 and including the right and left drive wheels 22R, 22L; and right and left biasing members 40 (the right biasing member not illustrated) respectively pushing the right and left drive wheel units 20L against the bottom portion (bottom plate 2a) side of the housing 2 in the linear direction (indicated by the arrow A).

In the following, a left wheel support structure 3L will be described. Since the right and left wheel support structures are symmetrical about a center line P (see FIG. 2) in the front-rear direction of the self-propelled vacuum cleaner 1, the description of the right wheel support structure will be omitted from this specification.

As illustrated in FIGS. 4(A) and 4(B), the support portion 30L has the following members: a fixed portion 31 fixed to the bottom portion of the housing 2; and the junction shaft 32 configured to allow the left drive wheel 22L to be slidably joined with the fixed portion 31 in the linear direction (indicated by the arrow A).

The fixed portion 31 is a plate-like member having a peripheral rib; and a lower end of the fixed portion is fixed to the bottom plate 2a of the housing 2 so that the fixed portion stands upright. The peripheral rib of the fixed portion 31 may be fixed to the inner frame wall 2d (see FIG. 3) of the housing 2.

A part of the peripheral rib of the fixed portion 31 serves as a junction rib 31a that projects upward and is shaped like a letter L from a lateral view.

This junction rib 31a has the following members: a first side portion 31a₁ projecting upward from a slanted portion of the peripheral rib of the fixed portion 31 and parallel to the linear direction (indicated by the arrow A); a second side portion 31a₂ abutting on the first side portion 21a₁ at a right angle; and a cylindrical guide portion 31a₃ perpendicularly penetrating through the second side portion 31a₂. This cylindrical guide portion 31a₃ has a cross-section square-shaped through-hole formed therein, and is configured to allow the junction shaft 32 (to be described below) of the support portion 30L to slidably penetrate through the cylindrical guide portion 31a₃ in the linear direction (indicated by the arrow A).

The junction shaft 32 is a cross-section square-shaped shaft. An end (lower end) of the junction shaft is joined with a boss portion 21b₃ of a casing 21 of the drive wheel unit 20L (to be described below); and the other end (upper end) of the junction shaft penetrating through the through-hole of the cylindrical guide portion 31a₃ of the fixed portion 31 is provided with a flange-shaped stopper portion 32a.

The left drive wheel unit 20L comprises the following members: the left drive wheel 22L; the casing 21 retaining the left drive wheel 22L that rotates upon an axle C placed in the right-left direction; a drive motor 23 installed in the casing 21 having an output shaft that can rotate forward and backward; and a torque transmission mechanism (not illustrated) provided in the casing 21 and configured to rotate the left drive wheel 22L by transmitting torque of the output shaft of the drive motor 23 to the left drive wheel.

The left drive wheel 22L has the following members: a wheel 22L₁; the axle C fixed to a central hole of the wheel 22L₁; and a rubber tire 22L₂ fitted to an outer periphery of the wheel 22L₁. The rubber tire 22L₂ has a concave-convex pattern formed on an outer periphery thereof (see FIG. 2 and FIG. 3); and such a concave-convex pattern is omitted from the drawings of FIG. 4 to FIG. 6.

The casing 21 comprises the following members: an end (lower end) configured to support the axle C of the left drive wheel 22L; the other end (upper end) 21a configured to support the drive motor 23; and an L-shaped junction rib 21b from a lateral view that is provided at an upper inclined surface between the end and the other end 21a of the casing and projects upward.

The junction rib 21b has the following members: a first side portion 21b₁ projecting from the upper inclined surface of the casing 21 in the linear direction (indicated by the arrow A); a second side portion 21b₂ abutting on the first side portion 21bi at a right angle; and the boss portion 21b₃ projecting from an external surface of the second side portion 21b₂. This boss portion 21b₃ has a cross-section square-shaped concave portion; and the lower end of the junction shaft 32 of the support portion 30L is configured to be fitted into and fastened to the boss portion 21b₃.

The torque transmission mechanism (not illustrated) provided in the casing 21 is configured to have, for example, the following members: an output gear fixed to the output shaft of the drive motor 23, the output shaft projecting into the casing 21; an input gear fixed to the axle of the left drive wheel 22L, the axle projecting into the casing 21; and one or more transmission gears that are rotatably provided in the casing 21 and engage with the output gear and the input gear. Alternatively the torque transmission mechanism is configured to have the following members: a first grooved pulley fixed to the output shaft of the drive motor 23, the output shaft projecting into the casing 21; a second grooved pulley fixed to the axle of the left drive wheel 22L, the axle projecting into the casing 21; and a timing belt strained between the first grooved pulley and the second grooved pulley. The torque transmission mechanism may be configured to reduce a rotational speed of the output shaft of the drive motor 23, or the drive motor 23 may be configured to adjust the rotational speed.

The biasing member 40 is a compression spring disposed between the fixed portion 31 of the support portion 30L and the boss portion 21b₃ of the casing 21 of the drive wheel unit 20L and through which the junction shaft 32 is inserted. The biasing member 40 may be a tension spring disposed between the stopper portion 32a of the junction shaft 32 and the cylindrical guide portion 31a₃ of the fixed portion 31 and whose both ends are joined with the stopper portion 32a and the cylindrical guide portion 31a₃, respectively.

Owing to the wheel support structure 3L, in which the support portion 30L, the drive wheel unit 20L, and the biasing member 40 are configured and assembled as described above, the junction shaft 32 of the support portion 30L is configured to be joined with the drive wheel unit 20L slidably in the linear direction (indicated by the arrow A) with respect to the fixed portion 31; and thus the drive wheel 22L becomes slidable in a direction (indicated by an arrow A₁) nearly parallel to the linear direction (indicated by the arrow A) with use of the axle C.

In a state that the housing 2 is placed on a floor G as illustrated in FIGS. 4(A) and 4(B), the linear direction (indicated by the arrow A) is inclined from a vertical line H; and the lower side of the linear direction is more inclined toward a traveling direction of the housing 2 (indicated by an arrow F in FIG. 4(A)). In this case the linear direction (indicated by the arrow A) may be tilted at a tilt angle θ of 15 to 45° with respect to the vertical line H; and it is preferable that this tilt angle should be 20 to 40°. In the Embodiments of the present invention, the tilt angle is set at 30°, which is particularly preferable.

As illustrated in FIG. 4(B), the drive wheel unit 20L joined with the fixed portion 31 with use of the junction shaft 32 of the support portion 30L is pushed toward the bottom plate 2a side of the housing 2 by the biasing member 40; therefore, once the drive wheel unit is lifted from the floor G, the drive wheel 22L largely pokes out from the bottom plate 2a in the direction (indicated by the arrow A₁) nearly parallel to the linear direction (indicated by the arrow A). At this point the drive wheel 22L is controlled by the stopper portion 32a of the junction shaft 32 in such a way that the drive wheel does not project downward to the bottom plate 2a. The extent to which the drive wheel may project from the bottom plate at this moment is, for example, that the axle C of the drive wheel 22L comes close to the bottom plate 2a of the housing 2.

Since the junction shaft 32 and the cylindrical guide portion 31a₃ are formed into the cross-section square-shape (non-round shape), the junction shaft 32 is unlikely to rotate upon (spin on) its own shaft center, with the result that the self-propelled vacuum cleaner 1 is ensured to travel straight. The junction shaft 32 and the cylindrical guide portion 31a₃ may be formed into a cross-section of a round shape. In this case, the casing 21 of the drive wheel unit 20L needs to come in contact with a side surface of the fixed portion 31 of the support portion 30L so that the junction shaft 32 is prevented from rotating upon its own shaft center.

### Traveling of Self-Propelled Vacuum Cleaner

As illustrated in FIG. 2, FIG. 4(A), and FIG. 5(A), when the self-propelled vacuum cleaner 1 supported by the right and left drive wheels 22R, 22L and the rear wheel 26 travels straight ahead (toward the direction indicated by the arrow F) on the floor G, the biasing member 40 placed between the support portion 30L and the drive wheel unit 20L is compressed by weights of the housing 2 and others; and most of the drive wheel 22L becomes in a state to be housed in the housing 2. When the self-propelled vacuum cleaner 1 comes close to a floor level difference S that is higher than a height of the bottom plate 2a but low enough to touch the front end 2a₁ of the bottom plate 2a, the front end 2a₁ of the housing 2 bumps against a corner of the floor level difference S, as illustrated in FIG. 5(B).

When the self-propelled vacuum cleaner 1 that has bumped against the floor level difference S travels further ahead, the curved or inclined front end 2a₁ of the housing 2 slides on the corner of the floor level difference S (as illustrated in FIG. 6(A)), and while the bottom plate 2a of the housing 2 scrapes against the corner of the floor level difference S, the housing runs onto the floor level difference S and travels forward. At this moment, the bottom plate 2a of the housing 2 becomes in a state to slant slightly because the front end 2a₁ side is raised (rises) from the floor level difference S; and a space between the bottom plate 2a and the floor G near the drive wheel 22L becomes large. This allows the drive wheel 22L to largely poke out from the bottom plate 2a diagonally forward and downward, as illustrated in FIG. 4(B) and FIG. 6(A).

When the drive wheel 22L, which greatly projects diagonally forward and downward, comes in contact with the floor level difference S, the drive wheel 22L climbs on the floor level difference S by using the corner of the floor level difference as a foothold, as illustrated in FIG. 4(B) and FIG. 6(B); and this enables the self-propelled vacuum cleaner 1 to climb onto the floor level difference S and to travel straight. In this case, since the drive wheel 22L is biased toward the floor G by the biasing member 40 in the direction (indicated by the arrow A₁) nearly parallel to the linear direction (indicated by the arrow A), the both directions being inclined from the vertical line H (as described above through the use of FIGS. 4(A) and 4(B)), the drive wheel 22L projects while the front half part side of the bottom plate 2a of the housing 2 shifts (slides) toward an opposite direction (diagonally rearward and upward) from the floor level difference S. This enables the drive wheel 22L to climb onto (or to ascend or overcome) the floor level difference S smoother without much trouble than the way the drive wheel is pressed toward the floor G in a vertical direction.

Owing to the wheel support structure 3L configured to allow the drive wheel 22L to change its position diagonally forward and downward, there is no need for the wheel support structure of the present invention to have an oscillation shaft for oscillating the drive wheel 22L up and down and a member for connecting the oscillation shaft to the drive wheel 22L to be placed at spaces in front and behind the drive wheel 22L (the oscillation shaft and the member were necessary for the traditional structure), with the result that the wheel support structure of the present invention is capable of conserving the spaces in front and behind the drive wheel 22L. This makes it possible to shorten a length of the self-propelled vacuum cleaner 1 in the front-rear direction and to downsize the self-propelled vacuum cleaner.

### Embodiment 2

FIG. 7 is explanatory views of a wheel support structure in accordance with Embodiment 2: FIG. 7(A) is the explanatory view of the wheel support structure that is in a state to travel on a floor; and FIG. 7(B) is the explanatory view of the wheel support structure that is in a state to climb on a floor level difference. FIGS. 7(A) and 7(B) use the same reference signs for members as the reference signs used for the members shown in FIGS. 4(A) and 4(B).

A self-propelled vacuum cleaner in accordance with Embodiment 2 is the same as the self-propelled vacuum cleaner in accordance with Embodiment 1, except that the former self-propelled vacuum cleaner comprises wheel support structures different in structure from the wheel support structures (see FIG. 4) of the latter self-propelled vacuum cleaner. In the following, how Embodiment 2 is different from Embodiment 1 will be mainly described. Since Embodiment 2 represents the wheel support structures that are symmetrical in the same way as Embodiment 1, the following will describe a left wheel support structure 103L only.

A support portion 130L in accordance with Embodiment 2 has the following members: a frame-like fixed portion 131 that is similar in outline from a lateral view to the peripheral rib of the support portion 30L in accordance with Embodiment 1; a first junction shaft 132a that is installed in an inclined upper frame of the fixed portion 131 and is configured to be slidable in the linear direction (indicated by the arrow A); and a second junction shaft 132b that is installed in the inclined upper frame of the fixed portion 131 and is configured to be slidable in a direction (indicated by an arrow A₂) parallel to the linear direction (indicated by the arrow A).

The first and second junction shafts 132a, 132b are cross-section round-shaped shafts and have stopper portions 132a₁, 132bi, respectively, at one end thereof.

The fixed portion 131 has the following members: a cross-section round-shaped first cylindrical guide portion 131a configured to allow the first junction shaft 132a to penetrate therethrough; and a cross-section round-shaped second cylindrical guide portion 131b configured to allow the second junction shaft 132b to penetrate therethrough.

A left drive wheel unit 120L comprises a casing 121, the drive motor 23, and the drive wheel 22L.

The casing 121 has the following members: a junction rib 121b₁, which is similar to the junction rib of Embodiment 1; a first boss portion 121b₂ that connects with the junction rib 121b₁ and is fitted and fixed to a lower end of the first junction shaft 132a; and a second boss portion 121b₃ that is provided on an inclined upper frame of the casing 121 and is fitted and fixed to a lower end of the second junction shaft 132b.

While the first junction shaft 132a is in a state to penetrate through the first cylindrical guide portion, the first boss portion 121b₂ and the first cylindrical guide portion 131a have the biasing member 40 placed therebetween.

Owing to the wheel support structure 103L of Embodiment 2 as configured above, the first junction shaft 132a and the second junction shaft 132b are configured to be slidable in the linear direction (indicated by the arrow A) and the direction (indicated by the arrow A₂) parallel to the linear direction, respectively; therefore, the first and second junction shafts 132a, 132b are prevented from turning around on their own axes even though these junction shafts are cross-section round-shaped, with the result that the self-propelled vacuum cleaner is highly capable of traveling straight.

### Embodiment 3

FIG. 8 is an explanatory view of a self-propelled electronic device in accordance with Embodiment 3 that is in a state to travel on a floor. FIG. 8 uses the same reference signs for members as the reference signs used for the members shown in FIG. 5.

A self-propelled vacuum cleaner 201 in accordance with Embodiment 3 uses the left wheel support structure of Embodiment 1 as a right wheel support structure and the right wheel support structure of Embodiment 1 as a left wheel support structure. All other members of Embodiment 3 are the same as the members of Embodiment 1.

As illustrated in FIG. 8, a drive wheel 222L in accordance with Embodiment 3 is position-changeable in a direction nearly parallel to a linear direction (indicated by an arrow B) whose lower side is inclined rearward.

When the self-propelled vacuum cleaner 201 climbs on the floor level difference S, the drive wheel 222L of a wheel support structure 203L in accordance with Embodiment 3 is less likely to get stuck with the floor level difference S than the way the drive wheel is biased toward the floor G in the vertical direction.

### Embodiment 4

FIG. 9 is an explanatory view of a self-propelled electronic device in accordance with Embodiment 4 that is in a state to travel on a floor. FIG. 9 uses the same reference signs for members as the reference signs used for the members shown in FIG. 5.

A self-propelled vacuum cleaner 301 in accordance with Embodiment 4 uses the left wheel support structure of Embodiment 2 as a right wheel support structure and the right wheel support structure of Embodiment 2 as a left wheel support structure. All other members of Embodiment 4 are the same as the members of Embodiment 2.

As illustrated in FIG. 9, a drive wheel 322L in accordance with Embodiment 4 is position-changeable in a direction nearly parallel to a linear direction (indicated by an arrow B) whose lower side is inclined rearward.

When the self-propelled vacuum cleaner 301 climbs on the floor level difference S, the drive wheel 322L of a wheel support structure 303L in accordance with Embodiment 4 is less likely to get stuck with the floor level difference S than the way the drive wheel is biased toward the floor G in the vertical direction.

### Other Embodiments

1. Embodiment 1 exemplifies the junction shaft 32 being cross-section square-shaped; however, its cross-section may be triangle-shaped, pentagon-shaped, hexagon-shaped, ellipsoidal, or oblong, or may be non-circular such that the junction shaft is convexed or concavely grooved partially at its perimeter in a longitudinal direction.
2. Embodiment 1 exemplifies the wheel support structure 3L in which the junction shaft 32 of the support portion 30L (see FIG. 4) is position-changeably joined with the casing 21 of the drive wheel unit 20L in the linear direction (indicated by the arrow A); however, the junction shaft 32 may be configured to be directly joined with the drive wheel 22L.

In this case, for example, the lower end of the junction shaft 32 is integrated with a hub extending in a right-left shaft center direction; and the output shaft penetrates through a through-hole of the hub, so that the drive motor, whose rotational speed is controllable and that can rotate back and forth, is fixed to a perimeter of the hub; and the drive wheel 22L is fixed to a tip of the output shaft.

### Conclusions

The wheel support structure of the present invention for the self-propelled electronic device comprises: the drive wheel configured to allow the housing to travel; the support portion fixed in the housing and configured to support the drive wheel position-changeably in the linear direction; and the biasing member configured to bias the drive wheel toward the bottom side of the housing in the linear direction inclined from the vertical line.

The wheel support structure of the present invention for the self-propelled electronic device may be formed in any of the following ways, and may be formed properly by any combinations of the following configurations.
(1) The linear direction is configured to make an acute angle with the traveling direction of the housing.
   This configuration is effective in improving performance of the self-propelled vacuum cleaner in climbing onto the floor level difference.
(2) The support portion has: the fixed portion fixed to the bottom portion of the housing; and the junction shaft configured to allow the drive wheel to be slidably joined with the fixed portion in the linear direction;
   the fixed portion has the through-hole configured to allow the junction shaft to slide therethrough in the linear direction;
   the junction shaft has: the one end joined with the drive wheel; and the stopper portion provided at the other end of the junction shaft penetrating through the through-hole of the fixed portion;
   the biasing member may be the compression spring disposed between the fixed portion of the support portion and the drive wheel, the junction shaft being inserted through the compression spring.
   This configuration makes it possible to downsize the wheel support structure in the front-rear direction and to simplify the wheel support structure.
(3) The junction shaft may have the cross-section of a non-round shape.
   This configuration is likely to prevent the junction shaft from spinning on its own axis, with the result that not only is the wheel support structure simplified, but the self-propelled vacuum cleaner is ensured to travel straight.
(4) The junction shaft may be replaced by the first junction shaft and the second junction shaft that are disposed parallel to the linear direction.

This configuration can prevent the first and second junction shafts from rotating on their own axes, with the result that not only is the wheel support structure simplified, but the self-propelled vacuum cleaner is ensured to travel straight.

The disclosed Embodiments should be recognized as exemplifications in all respects and should not be recognized as limitative. The scope of the present invention is not described by the expositions above but is defined in claims; and the scope of the present invention is intended to include the meanings (or the contents) equivalent to the scope of the claims and also include all alterations (and modifications) within the claims.

### [Industrial Applicability]

The wheel support structure of the present invention for the self-propelled electronic device is applicable to not only the self-propelled electronic devices described in the Embodiments above but also, for example, self-propelled ion generators, which travel while blowing ions, and self-propelled transport vehicles, which transport packages, etc.

### [Reference Signs List]

- 1, 201, 301: self-propelled electronic device
- 2: housing
- 2a: bottom plate (bottom portion)
- 3L, 103L, 203L, 303L: wheel support structure
- 22L, 22R: drive wheel
- 30L, 130L: support portion
- 31, 131: fixed portion
- 32: junction shaft
- 32a, 132a₁: stopper portion
- 40: biasing member
- 132a: first junction shaft
- 132b: second junction shaft
- G: floor
- H: vertical line
- θ: tilt angle

## Claims

1. A wheel support structure for a self-propelled electronic device, the wheel support structure comprising: a drive wheel configured to allow a housing to travel; a support portion fixed in the housing and configured to support the drive wheel position-changeably in a linear direction inclined from a vertical direction; and a biasing member configured to bias the drive wheel toward a bottom side of the housing in the linear direction.

2. The wheel support structure according to claim 1, wherein the linear direction is inclined toward a traveling direction of the housing as the linear direction goes downward.

3. The wheel support structure according to claim 1 or 2, wherein the support portion has: a fixed portion fixed to a bottom portion of the housing; and a junction shaft configured to allow the drive wheel to be slidably joined with the fixed portion in the linear direction;
the fixed portion has a through-hole configured to allow the junction shaft to slide therethrough in the linear direction;
the junction shaft has: one end joined with the drive wheel; and a stopper portion provided at the other end of the junction shaft penetrating through the through-hole of the fixed portion;
the biasing member is a compression spring disposed between the fixed portion of the support portion and the drive wheel, the junction shaft being inserted through the biasing member.

4. The wheel support structure according to claim 3, wherein the junction shaft has a cross-section of a non-round shape.

5. The wheel support structure according to claim 3, wherein the junction shaft is a first junction shaft and a second junction shaft that are disposed parallel to the linear direction.
